# EUROPEAN PATENT APPLICATION

(11) **EP 4 346 295 A1**
(43) Date of publication of application: **03.04.2024**
(21) Application number: 23193362.3
(22) Date of filing: 25.08.2023
(51) Int. Cl.: H04W 52/14, H04W 52/36, H04W 52/42

(54) **DEVICES, METHODS AND APPARATUSES FOR POWER HEADROOM REPORT**

(30) Priority: 28.09.2022 GB 202214179
(71) Applicant: Nokia Technologies Oy, 02610 Espoo (FI)
(72) Inventor: DEGHEL, Matha, 92120 Montrouge (FR); LADDU, Keeth Saliya Jayasinghe, 02140 Espoo (FI)
(74) Representative: Nokia EPO representatives

(57) **Abstract**

Embodiments of the present disclosure relate to operation of a power headroom report, PHR. A terminal device obtains one PHR or at least two PHRs to be reported based on feasibility information on the terminal device, wherein the feasibility information indicates whether a multiple transmission reception points, TRPs, uplink scheme is feasible for the terminal device. The terminal device performs a PHR reporting comprising the obtained one PHR or the obtained at least two PHRs to a network device. The solution for PHR as provided in the present disclosure can enable the terminal device determining whether to report a single PHR or at least two PHRs for a given cell.

## Description

### FIELD

Embodiments of the present disclosure generally relate to the field of communication, and in particular, to devices, methods, apparatuses and computer readable storage medium for power headroom report (PHR).

### BACKGROUND

With the development of communication technology, multi transmission reception point (TRP) operation has been introduced to improve the performance of communication between terminal devices and network devices. In a third generation partnership project (3GPP) Release 17 (Rel-17) introduced the support of multiple TRPs uplink repetition operation based on a time division multiplexing (TDM) uplink transmission scheme. Moreover, Rel-17 has also introduced a unified transmission configuration indicator (TCI) state framework.

3GPP Release 18 (Rel-18) specifies the support of simultaneous uplink (LTL) transmission, considering for example, example spatial division multiplexing (SDM) scheme, and will also support of extension of Rel-17 unified TCI framework for indication of multiple downlink and uplink TCI states focusing on mulita-TRP uses cases. Therefore, new enhancement for PHR operation is required when multiple uplink schemes are to be considered in standard, but it is not clear how to enhance the PHR operation yet.

### SUMMARY

In general, example embodiments of the present disclosure provide devices, methods, apparatuses and computer readable storage medium for PHR.

In a first aspect, there is provided an apparatus of a terminal device. The apparatus may comprise: means for obtaining one power headroom report, PHR, or at least two PHRs to be reported based on feasibility information on the terminal device, wherein the feasibility information indicates whether a multiple transmission reception points, TRPs, uplink scheme is feasible for the terminal device; and means for performing a PHR reporting comprising the obtained one PHR or the obtained at least two PHRs to a network device.

In a second aspect, there is provided an apparatus of a network device. The apparatus may comprise: means for receiving a report of feasibility information from a terminal device, or transmitting feasibility information to a terminal device, wherein the feasibility information indicates whether a multiple transmission reception points, TRPs, uplink scheme is feasible for the terminal device; and means for receiving a PHR reporting from the terminal device, wherein the PHR reporting is obtained based on the feasibility information.

In a third aspect, there is provided a method implemented at a terminal device. The method may comprise: obtaining, by the terminal device, one power headroom report, PHR, or at least two PHRs to be reported based on feasibility information on the terminal device, wherein the feasibility information indicates whether a multiple transmission reception points, TRPs, uplink scheme is feasible for the terminal device; and performing, by the terminal device, a PHR reporting comprising the obtained one PHR or the obtained at least two PHRs to a network device.

In a fourth aspect, there is provided a method implemented at a network device. The method may comprise: receiving, by the network device, a report of feasibility information from a terminal device, or transmitting feasibility information to a terminal device, wherein the feasibility information indicates whether a multiple transmission reception points, TRPs, uplink scheme is feasible for the terminal device; and receiving a PHR reporting from the terminal device, wherein the PHR reporting is obtained based on the feasibility information.

In a fifth aspect, there is provided a terminal device. The terminal device may comprise at least one processor; and at least one memory including computer program codes, wherein the at least one memory and the computer program codes are configured to, with the at least one processor, cause the terminal device to: obtain one power headroom report, PHR, or at least two PHRs to be reported based on feasibility information on the terminal device, wherein the feasibility information indicates whether a multiple transmission reception points, TRPs, uplink scheme is feasible for the terminal device; and perform a PHR reporting comprising the obtained one PHR or the obtained at least two PHRs to a network device.

In an sixth aspect, there is provided a network device. The network device may comprise at least one processor; and at least one memory including computer program codes, wherein the at least one memory and the computer program codes are configured to, with the at least one processor, cause the network device to: receive a report of feasibility information from a terminal device, or transmit feasibility information to a terminal device, wherein the feasibility information indicates whether a multiple transmission reception points, TRPs, uplink scheme is feasible for the terminal device; and receive a PHR reporting from the terminal device, wherein the PHR reporting is obtained based on the feasibility information.

In a seventh aspect, there is provided a non-transitory computer readable medium comprising program instructions for causing an apparatus to perform at least the method according to third or fourth aspect.

In a eight aspect, there is provided a computer program comprising instructions, which, when executed by an apparatus, cause the apparatus at least to: obtain one power headroom report, PHR, or at least two PHRs to be reported based on feasibility information on the terminal device, wherein the feasibility information indicates whether a multiple transmission reception points, TRPs, uplink scheme is feasible for the terminal device; and perform a PHR reporting comprising the obtained one PHR or the obtained at least two PHRs to a network device.

In an ninth aspect, there is provided a computer program comprising instructions, which, when executed by an apparatus, cause the apparatus at least to: receive a report of feasibility information from a terminal device, or transmit feasibility information to a terminal device, wherein the feasibility information indicates whether a multiple Transmission Reception Points, TRPs, uplink scheme is feasible for the terminal device; and receive a PHR reporting from the terminal device, wherein the PHR reporting is obtained based on the feasibility information

In a tenth aspect, there is provided a terminal device. The terminal device comprises obtaining circuitry configured to: obtain one power headroom report, PHR, or at least two PHRs to be reported based on feasibility information on the terminal device, wherein the feasibility information indicates whether a multiple transmission reception points, TRPs, uplink scheme is feasible for the terminal device; and performing circuitry configured to perform a PHR reporting comprising the obtained one PHR or the obtained at least two PHRs to a network device.

In a eleventh aspect, there is provided a network device. The network device comprises receiving circuitry configured to: receive a report of feasibility information from a terminal device, or transmit feasibility information to a terminal device, wherein the feasibility information indicates whether a multiple Transmission Reception Points, TRPs, uplink scheme is feasible for the terminal device; and receiving circuitry configured to receive a PHR reporting from the terminal device, wherein the PHR reporting is obtained based on the feasibility information.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example network environment in which example embodiments of the present disclosure may be implemented;
FIG. 2 illustrates an example flowchart of a method implemented at a terminal device according to example embodiments of the present disclosure;
FIG. 3 illustrates an example flowchart of a method implemented at a network device according to example embodiments of the present disclosure;
FIG. 4 illustrates an example process of PHR operation according to some embodiments of the present disclosure;
FIG. 5 illustrates another example process of PHR operation according to some embodiments of the present disclosure;
FIG. 6 illustrates an example signaling process for PHR operation according to some embodiments of the present disclosure;
FIG. 7 illustrates an example simplified block diagram of an apparatus that is suitable for implementing embodiments of the present disclosure; and
FIG. 8 illustrates an example block diagram of an example computer readable medium in accordance with some embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein may be implemented in various manners other than the ones described below.

In the following description and claims, unless defined otherwise, all technical and scientific terms used herein have the same meaning as commonly understood by one of ordinary skills in the art to which the present disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It may be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s) that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as long term evolution (LTE), LTE-advanced (LTE-A), wideband code division multiple access (WCDMA), high-speed packet access (HSPA), narrow band Internet of things (NB-IoT) and so on. Furthermore, the communications between a terminal device and a network device in the communication network may be performed according to any suitable generation communication protocols, including, but not limited to, the third generation (3G), the fourth generation (4G), 4.5G, the fifth generation (5G) communication protocols, and/or beyond. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a remote radio unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (LTE), a subscriber station (SS), a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

As used herein, the term "resource", "transmission resource", "resource block", "physical resource block" (PRB), "uplink (UL) resource" or "downlink (DL) resource" may refer to any resource for performing a communication, for example, a communication between a terminal device and a network device, such as a resource in time domain, a resource in frequency domain, a resource in space domain, a resource in code domain, a resource in a combination of more than one domain or any other resource enabling a communication, and the like. In the following, a resource in time domain (such as, a subframe) will be used as an example of a transmission resource for describing some example embodiments of the present disclosure. It is noted that example embodiments of the present disclosure are equally applicable to other resources in other domains.

As used herein, the term "TRP" refers to a transmit-receive point having an antenna array (with one or more antenna elements) at the network side located at a specific geographical location, which may be used for transmitting and receiving signals to/from the terminal device. In embodiment of the present disclosure, a TRP may refer to Macro Cell, micro cell, an RRH, a relay, a femto node, a pico node, etc. Although some embodiments of the present disclosure are described with reference to two TRPs for example, these embodiments are only for the purpose of illustration and help those skilled in the art to understand and implement the present disclosure, without suggesting any limitations as to the scope of the present disclosure. It is to be understood that the present disclosure described herein can be implemented in various manners other than the ones described below.

As used herein, the term "beam" may refer to a communication resource. Different beams may be considered as different resources. A beam may also be represented as a spatial filter. A technology for forming a beam may be a beamforming technology or another technology. The beamforming technology may be specifically a digital beamforming technology, analog beamforming technology, or a hybrid digital/analog beamforming technology. A communication device (including the terminal device and the network device) may communicate with another communication device through one or more beams. One beam may include one or more antenna ports and be configured for a data channel, a control channel, or the like. One or more antenna ports forming one beam may also be considered as an antenna port set. A beam may be configured with a set of resource, or a set of resource for measurement, and a beam may be represent by for example a reference signal and/or related resource for the reference signal. A beam may also represent by a reference cell identifier or resource identifier.

In multiple TRPs operation, a TRP of the multiple TRPs performing data transmission towards a terminal device may be associated with a specific physical cell identify (PCI), respectively; for example, each TRP may provide a cell having the corresponding PCI.

Rel-17 introduced the support of multiple TRPs uplink repetition operation based on a TDM uplink transmission scheme. In addition, in Rel-17, a unified TCI framework is introduced, which means that TCI states so far providing quasi-co-location (QCL) assumptions for the reception of DL signals and channels would be used also to provide spatial sources for the transmission of UL signals and channels.

The unified TCI framework defines a concept of indicated TCI state. The indicated TCI state can be joint DL and UL TCI state or separate DL and separate UL TCI states. Indicated TCI state provides QCL source (DL) and spatial source (LTL) for the set of downlink signals and channels and for the set of uplink signals and channels, respectively. In Rel-17, there can be one indicated joint DL and UL or one indicated DL and one indicated UL TCI state for the UE.

In addition, Rel-17 also introduced UE initiated panel activation and selection via UE reporting. UE may report a list of UE capability value (sets), wherein each UE capability value (set) may comprise the max supported number of sounding reference signals (SRS) ports and any two capability values (sets) are different. The UE may report one index of UE capability value (set) for each reported channel state information reference signal (CSI-RS) resource indicator (CRI) / synchronization signal/physical broadcast channel Resource Block Indicator (SSBRI) in one beam reporting.

Meanwhile, Rel-18 discussed on 'MIMO enhancements', which includes two TAs for UL multiple downlink control information (DCI) for multiple TRPs operation. In addition, Rel-18 will specify the extension of Rel-17 Unified TCI framework for indication of multiple DL and UL TCI states focusing on multiple TRPs use cases, using Rel-17 unified TCI framework.

Considering the Rel-18 scope and the related agreements so far, multiple TRPs TDM scheme and SDM UL scheme will need to co-exist together, and they also need to co-exist with single-TRP UL scheme. In other words, the network would be able to dynamically switch among some or all of these different schemes. Therefore, there is a need for supporting of simultaneous LTL transmissions schemes, and be able to dynamically switch between some or all these different schemes. From the above considerations, the inventors notice that one important aspect to address is to provide enhancements for PHR operation.

According to embodiments of the present disclosure, the terminal device obtains one power headroom report, PHR, or at least two PHRs to be reported based on feasibility information, wherein the feasibility information indicating whether a multiple TRPs uplink scheme is feasible for the terminal device. The terminal device further performs a PHR reporting comprising the obtained one PHR or the obtained at least two PHRs to a network device. In this way, the terminal device can determine or decide whether to report a single PHR or two PHR for a given cell.

In embodiments of the present disclosure, the terminal device dynamically switches between the multiple TRPs uplink scheme and a single TRP uplink scheme, for example based on network conditions, configuration from the network, etc. The terminal device may determine one PHR or at least two PHRs to be reported based on the feasible uplink scheme of the multiple TRPs or the single TRP in response to the dynamic switching. For example, the terminal device may trigger transmitting the one PHR instead of transmitting the at least two PHRs, or alternatively trigger a transmission of at least two PHRs.

The feasibility information in the present disclosure may indicate that the terminal device can transmit to a single TRP or can transmit to at least two TRPs. In some examples, the feasibility information may indicate that a temporary uplink transmission capability value set or uplink transmission capability value set controlled by a network device is possible to be applied in a terminal device.

The feasibility information may be changed due to some reasons for example temporary available uplink transmission to one TRP or to at least two TRPs, or the network device may control the uplink transmission based on network devices status, for example, throughput in the network device. The terminal device may be configured with one or more panels each having a plurality of ports. The terminal device may be communicated with one or at least two TRPs using ports of the panel. One panel may be associated with one or more TRPs and one panel may be characterized by one or more transmission configuration indicator (TCI) states.

Furthermore, a transmission may be performed using a certain TCI state from a corresponding TRP. Transmission to a single TRP may be referred to a TCI state. Transmission to at least two TRPs may be referred to at least two TCI states. One TCI state may be associated with one TRP.

The "feasibility" or "feasible" used in the present disclosure may indicate the possibility of communication with a network device at some instance or for a period of time. The "feasibility" or "feasible" is different from the term "capability." The feasibility means the possibility under constrains of the capability and other operation conditions, for example network conditions, configuration from the network device, etc. For example, even if a terminal device has the capability to connect with at least two TRPs, but it does not mean the terminal device can have the feasibility of connecting with at least two TRPs all the time. Some time, it may connect to two TRPs and in other times, it may connect to only one TRP.

Although functionalities described herein can be performed, in various example embodiments, in a fixed and/or a wireless network node may, in other example embodiments, functionalities may be implemented in user equipment (such as a cell phone or tablet computer or laptop computer or desktop computer or mobile IOT device or fixed IOT device). This user equipment may, for example, be furnished with corresponding capabilities as described in connection with the fixed and/or the wireless network node(s), as appropriate. The user equipment may be the user equipment and/or a control device, such as a chipset or processor, configured to control the user equipment when installed therein. Examples of such functionalities include the bootstrapping server function and/or the home subscriber server, which may be implemented in the user equipment apparatus by providing the user equipment apparatus with software configured to cause the user equipment apparatus to perform from the point of view of these functions/nodes.

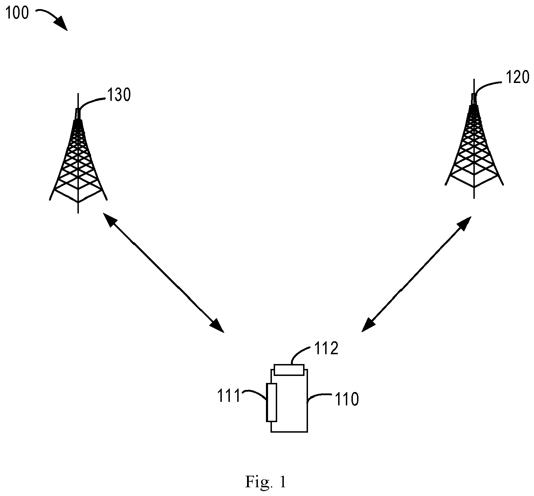

For illustrative purposes, principle and example embodiments of the present disclosure for the PHR operation will be described below with reference to FIG. 1- FIG. 8. However, it is to be noted that these embodiments are given to enable the skilled in the art to understand inventive concepts of the present disclosure and implement the solution as proposed herein, and not intended to limit scope of the present application in any way.

FIG. 1 illustrates an example network environment 100 in which example embodiments of the present disclosure may be implemented. The environment 100, which may be a part of a communication network, includes terminal devices and network devices.

As illustrated in FIG. 1, the communication network 100 may include a terminal device 110 (hereinafter may also be referred to as user equipment 110 or a UE 110). The communication network 100 may further include a network device 120 and a network device 130 (hereinafter may also be referred to as a TRP or site). Each network device of these network devices may manage one or more cells. As an example, a first cell (not shown) may be managed by the network device 120, and a second cell (not shown) may be managed by the network device 130.

In addition, the network device 120 is configured with a plurality of beams which provides coverage for the first cell, the network device 130 is configured with a plurality of beams which provide coverage for the second cell. In an example, the terminal device 110 may transmit or receive within a cell via the beam providing the coverage for this cell. The terminal device 110 may move through cells provided by different network devices.

The terminal device, for example UE 110 may have several panels, such as panel 111 and panel 112. UE 110 reports a list of UE capability value sets. UE 110's capability value sets comprise the max supported number of SRS ports. Any two capability values sets may be different. The LTE 110 may report one or more indexes of LTE capability value sets for each reported CRESSBRI in one beam reporting.

The UE 110 may support or be configured with simultaneous multi-panel UL transmission (STxMP) operation and/or multiple-TRPs UL schemes. It's noted that a multi-panel UL transmission may also be considered as multiple TRPs UL scheme. The UE 110 may report one or at least two PHRs for a given cell at least based on one or more of the following: at least one beam reporting instance, activated or indicated TCI state(s) for UL transmission(s) in the serving cell or carrier component (CC), or UL transmission scheme applicable for PHR reporting, or some command from the network device. Details about determination on whether to report one PHR or at least two PHRs will be further described hereinafter.

It is to be understood that the number of network devices and terminal devices is given only for the purpose of illustration without suggesting any limitations. The system 100 may include any suitable number of network devices and/or terminal devices adapted for implementing embodiments of the present disclosure. Although not shown, it would be appreciated that one or more terminal devices may be located in the environment 100.

Communications in the network environment 100 may be implemented according to any proper communication protocol(s), comprising, but not limited to, the third generation (3G), the fourth generation (4G), the fifth generation (5G) or beyond, wireless local network communication protocols such as institute for electrical and electronics engineers (IEEE) 802.11 and the like, and/or any other protocols currently known or to be developed in the future. Moreover, the communication may utilize any proper wireless communication technology, comprising but not limited to: multiple-input multiple-output (MIMO), orthogonal frequency division multiplexing (OFDM), time division multiplexing (TDM), frequency division multiplexing (FDM), code division multiplexing (CDM), Bluetooth, ZigBee, and machine type communication (MTC), enhanced mobile broadband (eMBB), massive machine type communication (mMTC), ultra-reliable low latency communication (URLLC), carrier aggregation (CA), dual connection (DC), and new radio unlicensed (NR-U) technologies.

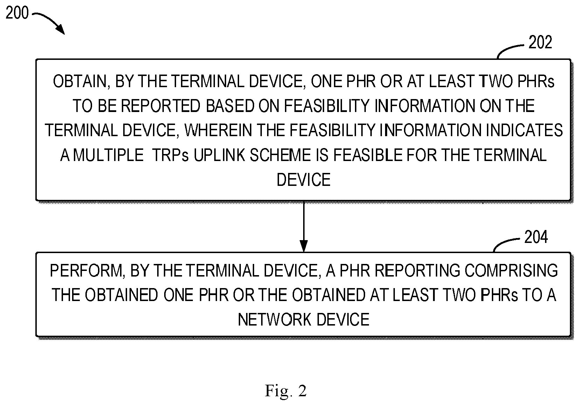

Reference is made to FIG. 2, which illustrates a method 200 of PHR operation at terminal device. In this method, a solution is provided for enabling a terminal device to determine whether a single PHR or at least two PHRs needs be reported for a given cell. Hereinafter, sometimes, examples might be made to two PHRs to describe the solution as proposed herein, but it is to be noted that it is only an example scenario and the present disclosure is not limited thereto; instead, the solution could be also applied to a scenario of more than two PHRs.

At block 202, the terminal device obtains one PHR, or at least two PHRs to be reported based on feasibility information on the terminal device, wherein the feasibility information indicates whether a multiple TRPs uplink scheme is feasible.

As an example, LTE 110 may obtain one PHR if the feasibility information indicates that it is not feasible for UE 110 to use a multiple TRPs uplink scheme. As another example, the terminal device 110 may obtain at least two PHRs to be reported based on feasibility information on the UE 110 if the feasibility information indicates the UE 110 that a multiple TRPs uplink scheme is feasible.

As an example, the feasibility information may indicate that multiple TRPs UL schemes is feasible, such as STxMP SDM scheme, or single frequency network (SFN) scheme, or TDM scheme, or other fully/partially overlapping UL transmissions for example at some instance or during a period of time.

In some example embodiments, the obtaining one PHR or at least two PHRs to be reported may further comprise determining the one PHR or the at least two PHRs to be reported based on the feasible uplink scheme of the multiple TRPs or the single TRP.

In some example embodiments, the terminal device may dynamically switch between the multiple TRPs uplink scheme(s) and a single TRP uplink scheme.

In some example embodiments, the feasibility information may comprise any of: information indicating feasibility of a single capability value set index; information indicating feasibility of at least two different capability value set indexes; an indication from the network device indicating a single capability value set index to be feasible; an indication from the network device indicating two capability values set indexes to be feasible.

The feasibility of single capability value set index may imply the terminal device is to use a single panel or the terminal device has one panel active, while the feasibility of at least two different capability value set indexes might imply that the terminal device is to use at least two panels or the terminal device has at least two panels active. The feasibility information may be obtained by the terminal device itself based on LTE's capability information/reporting or obtained from an indication from the network device. For example, UE's capability information indicates a single or at least two capability value set indexes to be feasible.

In some example embodiments, the feasibility information may be determined based on one or more of: at least one beam reporting instance; indicated transmission configuration indicator, indicated or activated at least one TCI state for at least one uplink transmission in a cell; uplink transmission scheme applicable for PHR reporting. In addition or alternatively, it may be also be determined based on a PHR report mode indication (e.g. via MAC CE or DCI, or even RRC) from the network device, the PHR report mode indication may be indicative of whether one PHR, or at least two PHRs are to be reported.

In some example embodiments, the obtaining one PHR or at least two PHRs to be reported may further comprise: determining the one PHR or the at least two PHRs to be reported based on the feasible uplink scheme of the multiple TRPs or the single TRP.

In some example embodiments, the obtaining one PHR or at least two PHRs to be reported may further comprise triggering transmitting one PHR instead of transmitting at least two PHRs, based on one or more of:
▪ a single capability value set index instead of at least two capability values set indexes is detected or determined or reported by the terminal device;
▪ the terminal device is indicated a single capability value set index instead of at least two capability value set indexes to be feasible; or
▪ one-PHR report mode is configured or indicated instead of at least two-PHR report mode.

In some example embodiments, the obtaining one PHR or at least two PHRs to be reported may further comprise one or more of:
▪ triggering transmitting at least two PHRs instead of transmitting one PHR, wherein the trigger comprises:
▪ at least two capability value set indexes instead of at least two capability values set indexes is detected or determined or reported by the terminal device;
▪ the terminal device is indicated at least two capability value set indexes instead of one capability value set index to be feasible; or
▪ at least two-PHRs report mode is configured or indicated instead of one-PHR report mode.

In some example embodiments, the at least two PHRs may be obtained based on one or more of the following conditions related to beam report instances: a beam reporting corresponds to at least two different capability value set indexes; or reported beams in a group-based beam reporting contain beam pairs corresponding to at least two TRPs.

In other words, if a beam reporting contains beam report corresponding to at least two different capability value set indexes, it may indicate that the terminal device may use two panels and, in such a case, the terminal device may obtain at least two PHRs. As an example, the feasibility information may be determined by a beam reporting (e.g., CRIs/SSBRIs) corresponding to at least two different capability value set indexes.

Besides, if the group-based beam reporting contains reported beam pairs (e.g., CRIs/SSBRIs) corresponding to at least two TRPs, it may indicate that the terminal device may use two panels and, in such a case, the terminal device may also obtain at least two PHRs.

In some example embodiments, the at least two PHRs may be obtained based on one or more the following conditions related to multiple TRP uplink schemes:
a feasibility indicates that applying any of a space division multiplexing, SDM, uplink transmission scheme or a time division multiplexing, TDM, uplink transmission scheme, or overlapping uplink transmission is feasible, wherein the feasibility is determined based on the beam reporting corresponding to at least two different capability value set indexes;
a feasibility indicates that applying any of a SDM uplink transmission scheme, a TDM uplink transmission scheme, or overlapping uplink transmission is feasible, wherein the feasibility is determined based on the group-based beam reporting containing beam pairs corresponding to at least two TRPs;
   uplink transmission scheme applicable for PHR reporting is determined as SDM or TDM or overlapping uplink transmission; or
   a cell triggers the PHR and uses any of SDM uplink transmission, TDM uplink transmission scheme, or overlapping uplink transmission scheme, wherein the cell is different from a certain cell on which one or at least two PHRs are to be reported.

As an example, LTE 110 may report an indication with the beam report of feasibility to apply SDM (or even SFN) / (multiple TRPs) TDM scheme using the reported CRIs/SSBRIs. In such a case, at least two PHRs may be obtained. This may be specific for single-DCI mode and/or multi-DCI mode (overlapping UL transmissions), e.g., by an indication from a network.

As an example, when the LTL transmission scheme applicable for PHR reporting is determined to be SDM or TDM or overlapping UL transmission, at least two PHRs may be obtained.

As another example, the cell triggering PHR, if different from the given cell, is using SDM (or SFN) or TDM UL scheme, or more generally multiple TRPs UL scheme, and then at least two PHRs are to be obtained.

In some embodiments, the above one or more conditions may be a part of the feasibility information. In some embodiments, the above one or more condition may all of the feasibility formation.

In some example embodiments, the at least two PHRs may be obtained based on one or more the following conditions related to TCI states. These conditions may include one or more of
at least two TCI states corresponding to at least two capability value set indexes are indicated;
at least two TCI states corresponding to at least two capability value set indexes are activated;
at least two TCI states are indicated;
at least two TCI states are activated;
TCI states corresponding to reported beams are indicated, wherein the reported beams are contained in the beam reporting corresponding to at least two different capability value set indexes, or contained in the group-based beam reporting containing beam pairs corresponding to at least two TRPs;
TCI states corresponding to reported beams are activated, wherein the reported beams are contained in the beam reporting corresponding to at least two different capability value set indexes or reported beams the group-based beam reporting containing beam pairs corresponding to at least two TRPs;
TCI states corresponding to at least two different control resource set, CORESET, pool indexes are indicated;
TCI states corresponding to at least two different TRPs are indicated;
TCI states corresponding to at least two panels are indicated;
TCI states corresponding to at least two different PCIs are indicated;
TCI states corresponding to at least two different CORESET Pool indexes are activated;
TCI states corresponding to at least two different TRPs are activated;
TCI states corresponding to at least two panels are activated; or
TCI states corresponding to at least two different PCIs are activated.

As an example, the network device may use DCI or MAC CE to indicate or activate TCI states corresponding to the reported beams (according to the above reported CRIs/SSBRIs), for example, corresponding to the beam reporting (e.g., CRIs/SSBRIs) corresponding to at least two different capability value set indexes, or corresponding to the group-based beam reporting containing reported beam pairs (e.g., CRIs/SSBRIs) corresponding to at least two TRPs.

As another example, the network device may use DCI or MAC CE to indicate or activate TCI states corresponding to different CORESET Pool index(es) or, more generally, to different TRPs (e.g. TRP 120 and TRP 130) or panels (e.g. panel 111 and panel 112) for UE 110. In these cases, it may indicate that at least two PHRs may be obtained

As another example, LTE 110 may be e.g., indicated or activated via DCI or MAC CE by TRP 130) TCI states corresponding to at least two different PCIs. As another example, UE 110 may be indicated or activated TCI states corresponding to different CORESET Pool indexes, or more generally, to different TRPs or panels. In these cases, it may indicate that at least two PHRs may be obtained.

In some embodiments, the above one or more conditions may be a part of the feasibility information. In some embodiments, the above one or more condition may all of the feasibility formation.

In some example embodiments, the one PHR may be obtained based on one or more of the following conditions related to beam report instances: a beam reporting corresponds to a single capability value set index; or reported beams in a group-based beam reporting contain no pair of beams corresponding to at least two TRPs.

In some example embodiments, the one PHR may be obtained based on one or more of the following conditions:
reported beams in the beam reporting correspond to a single capability value set index,
reported beams in the group-based beam reporting contain no beam pairs corresponding to at least two TRPs; or
uplink transmission scheme applicable for the PHR reporting is determined as a single-TRP uplink transmission scheme.

In some embodiments, the above one or more conditions may be a part of the feasibility information. In some embodiments, the above one or more condition may all of the feasibility formation.

In some example embodiments, the one PHR may be obtained based on one or more of the following conditions related to TCI states:
at least two TCI states corresponding to a single capability value set index are indicated;
at least two TCI states corresponding to a single capability value set index are activated;
a single TCI state is indicated;
a single TCI state is activated;
at least one TCI state not corresponding to reported beams is indicated, wherein the reported beams are contained in beam reporting corresponding to at least two different capability value set indexes;
at least one TCI state not corresponding to reported beams is activated, wherein the reported beams are contained in beam reporting corresponding to at least two different capability value set indexes;
at least one TCI state corresponding to a single CORESET pool index;
at least one TCI state corresponding to a single TRP is indicated;
at least one TCI state corresponding to a single panel is indicated;
at least one TCI state corresponding to a single PCI is indicated;
at least one TCI state corresponding to a single CORESET pool index is activated;
at least one TCI state corresponding to a single TRP is activated;
at least one TCI state corresponding to a single panel is activated; or
at least one TCI state corresponding to a single PCI is activated.

In some embodiments, the above one or more conditions may be a part of the feasibility information. In some embodiments, the above one or more condition may all of the feasibility formation.

In some example embodiments, the TCI states may be indicated or activated via any of DCI or MAC CE.

Generally, if LTE may learn the feasibility information based on for example any of the above conditions, it may decide to obtain a single PHR or at least two PHRs.

In some example embodiments, the terminal device may obtain the one or at least two PHRs by the following example operations. First, the UE 110 may obtain power control parameters corresponding to the determined uplink transmission scheme. The UE may then obtain the one PHR or the at least two PHRs for a certain cell based on the contained power control parameters and the determined uplink transmission scheme. In some embodiments, a PHR may be based on the reference uplink transmission or an actual uplink transmission.

The UE 110 may use or assume the determined scheme, along with its associated or corresponding power control parameters which may be configured or indicated, in order to calculate the one or two PHRs (to be reported) for the given cell.

As an example, LTE 110 may determine at least one default power control parameter set to use for the calculation of at least one of the PHRs where this set may be configured via RRC and may correspond to or be associated with a certain TRP or CORESET Pool Index (or COERSET group) or PCI, or even with a certain capability value set index or panel. It is noted that a PHR may be based on a reference LTL transmission or actual UL transmission, which means that in all the above a PHR may be virtual or actual PHR.

In some example embodiments, an uplink transmission scheme applicable for PHR reporting for a certain cell may be determined in many different ways.

In some embodiments, the uplink transmission scheme may be determined as an uplink transmission scheme used for PHR calculation in a cell where the PHR reporting is triggered. In some embodiments, the uplink transmission scheme may be determined as an uplink transmission scheme indicated by the feasibility information.

In some embodiments, the latest scheme used for uplink transmission and/or the PHR calculation for a certain cell may be determined as the uplink transmission scheme as well. Besides, in some embodiments, the uplink transmission scheme may be determined as an uplink transmission scheme configured, or indicated by the network device.

As an example, UE 110 may follow, or use, or determine the scheme (e.g., SDM, TDM, or S-TRP UL scheme) used for the PHR calculation on the cell where the PHR reporting is triggered. If LTE 110 reports an indication of feasibility to apply SDM (or even SFN) using or along with the reported CRIs/SSBRIs (and/or corresponding TCI states are indicated/activated for LTE 110), LTE 110 may use or determine the SDM scheme for PHR calculation.

As another example, if the LTE 110 reports an indication of feasibility to apply multiple TRPs TDM UL or to not apply SDM using or along the reported CRIs/SSBRIs (and/or corresponding TCI states are indicated/activated for the LTE), LTE 110 may use or determine the multiple TRPs TDM scheme for PHR calculation.

As a further example, LTE 110 may be configured (e.g., via RRC), specified, or indicated (e.g., via MAC CE or DCI) which the scheme to use for the given cell. UE 110 may choose or determine the scheme to use and indicate its choice, via UCI or MAC CE transmitted on PUCCH or PUSCH, to TRP.

At block 204, the terminal device may perform a PHR reporting comprising the obtained one PHR or the obtained at least two PHRs to a network device.

In some example embodiments, the terminal device may further transmit a report of the feasibility information to the network device. In such a way, the network device may have the knowledge about the feasibility information of the terminal device and it may activate or indicate suitable TCI states, or to schedule a suitable UL scheme, or to indicate suitable capability value set index(es) to be feasible, or to determine and indicate suitable PHR mode (one PHR mode or two PHR mode), or to determine a number of TCI states to be indicated (e.g. one vs. two TCI states), and so on.

In some embodiments, LTE may determine to obtain one PHR or at least two PHRs, and in such case, UE may indicate such information using one or more new or reserved bits in UCI or MAC CE to inform the network device whether one PHR or at least two PHRs are reported. In some embodiments, UE may also indicate which UL scheme it has assumed for the PHRs calculation using one or more additional new or reserved bits in UCI or MAC CE.

In some example embodiments, the report of feasibility information may be transmitted on UCI. In some embodiments, the report of feasibility information may also be transmitted via MAC CE.

In some example embodiments, the one or more conditions are at least a part of the feasible information.

In some example embodiments, the TCI states are indicated or activated via any of downlink control information, DCI, or medium access control control element, MAC CE.

By means of such of proposed solution as proposed herein, it is possible to enable the terminal device to determine whether to report a single PHR or at least two PHRs for a given cell. Furthermore, it may also enable a UE to determine which UL scheme (e.g. among SDM, multiple TRPs TDM, and single-TRP) to use for PHR(s) calculation. Therefore, the PHR operation may be enhanced especially for co-existing up transmission scheme, for example, TDM UL scheme, SDM UL scheme, other overlapping UL schemes, and the single-TRP UL scheme.

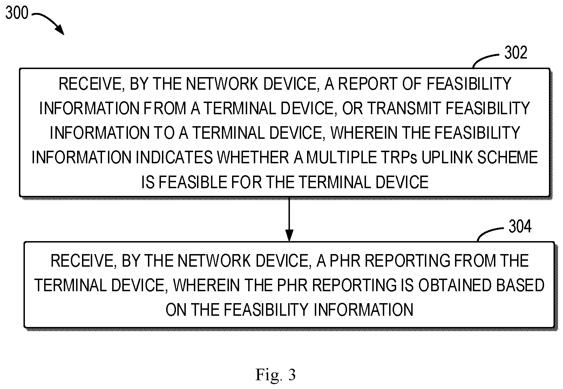

Reference is made to FIG. 3, which illustrates a flowchart of a method 300 of PHR at network device according to some embodiments of the present disclosure.

At block 302, the network device may receive a report of feasibility information from a terminal device, or transmit feasibility information to a terminal device, wherein the feasibility information indicates whether a multiple TRPs uplink scheme is feasible by the network device. It's noted that if multiple TRPs uplink scheme is not feasible based on the feasibility information, then single-TRP uplink scheme may be feasible.

As an example, TRP 120 or TRP 130 may receive a report of feasibility information from a terminal device, wherein the feasibility information indicates whether a multiple TRPs uplink scheme is feasible for LTE 110.

In some example embodiments, the report of feasibility information is transmitted on any of UCI or MAC CE.

In some example embodiments, the feasibility information may comprise information indicating that a single capability value set index is feasible or information indicating that at least two different capability value set indexes are feasible.

At block 304, the network device may receive a PHR reporting from the terminal device, wherein the PHR reporting is obtained based on the feasibility information.

As an example, TRP 120 or TRP 130 may receive a PHR reporting from LTE 110, wherein the PHR reporting is obtained based on the feasibility information. As another example, TRP 120 or TRP 130 may transmit feasibility information to LTE 110.

In some example embodiments, the network device may transmit one or more of:
an indication indicating whether one or two capability values set indexes to be feasible;
indicated at least one transmission configuration Indicator (TCI) state for uplink one or more transmissions in a certain cell;
activated at least one TCI state for at least one uplink transmission in a certain cell; or
uplink transmission scheme applicable for PHR reporting.

In some embodiments, the above transmitted information may be all or part of the feasibility information.

In some example embodiments, the network device may transmit TCI states corresponding to any of:
a single CORESET Pool index;
at least two different CORESET Pool indexes;
a single TRP;
at least two different TRPs;
a single panel;
at least two panels;
single PCI; or
at least two different PCIs.

The above transmitted TCI states above may be all or part of feasibility information.

In some example embodiments, the TCI states may be indicated or activated via any of downlink control information, DCI, or MAC CE.

The network device has PHR operations corresponding to those in terminal devices. Those similar operations of the technical features are described with reference to FIG.2 hereinabove. For a purpose of simplification, similar operations to those in the terminal device are not elaborated.

Similarly, by the way of such of proposed method 300, it is also possible to allow the terminal device to determine or decide whether to report a single PHR or at least two PHRs for a given cell. In another aspect, it also allows a UE to determine which UL scheme (e.g. among SDM, multiple TRPs TDM, and single-TRP) to use for PHR(s) calculation.

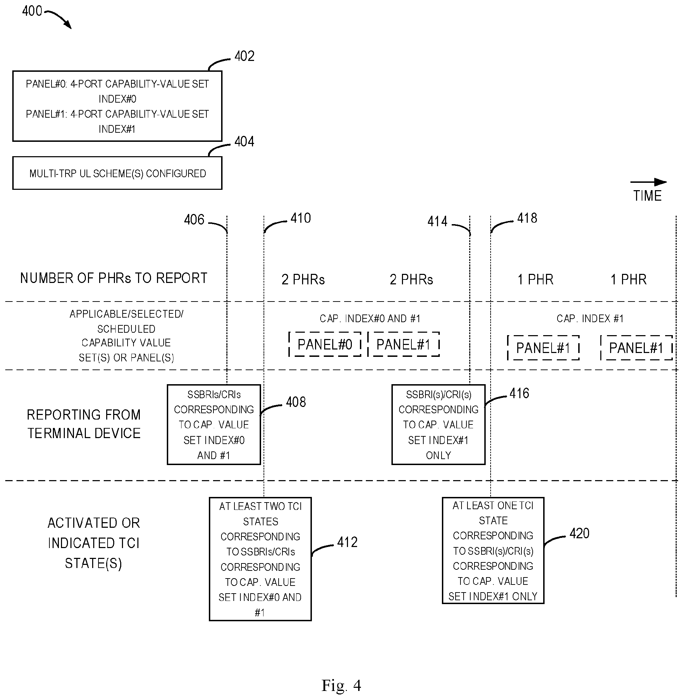

Reference is now made to FIG. 4, which illustrates an example process of PHR operation. In FIG. 4, UE 110 is taken as an example to illustrate the example process; however it is just for illustrative purposes without limiting the present disclosure in any way.

Blocks 402 and 404 shows configurations of UE 110 from the network device. At block 402, UE 110 may be configured with two panels, including panel #0 configured with 4-port capability value set index #0, and panel #1 configured with 4-port capability value set index #1. At block 404, UE 110 may be configured with multiple TRPs UL scheme (such as SDM, SFN, or TDM scheme).

At block 406, UE 110 may perform beam reporting and UE 110 may learn that the reported beam reporting contains SSBRIs or CRIs corresponding to capability value set index #0 and index #1, as illustrated in block 408. At block 410, TRP 120 or TRP 130 may transmit at least one indicated or activated TCI state via DCI or MAC CE and UE 110 may learn that the transmitted at least one indicated or activated TCI state are at least two TCI states corresponding to SSBRIs/CRIs corresponding to capability value set index #0 and index #1, as illustrated in block 412. Thus, LTE 110 may decide that two PHRs are to be reported.

At block 414, UE 110 may report further beam reporting and UE 110 may learn that the reported beam reporting contains SSBRIs or CRIs corresponding to capability value set index #1 only, as illustrated in block 416. At block 418, TRP 120 or TRP 130 may transmit at least one indicated or activated TCI state and, UE 110 may learn that the transmitted at least one indicated or activated TCI state is one TCI state corresponding to SSBRIs/CRIs corresponding to capability value set index #1 only as illustrated in block 420. Thus, UE 110 may decide that one PHR is to be reported.

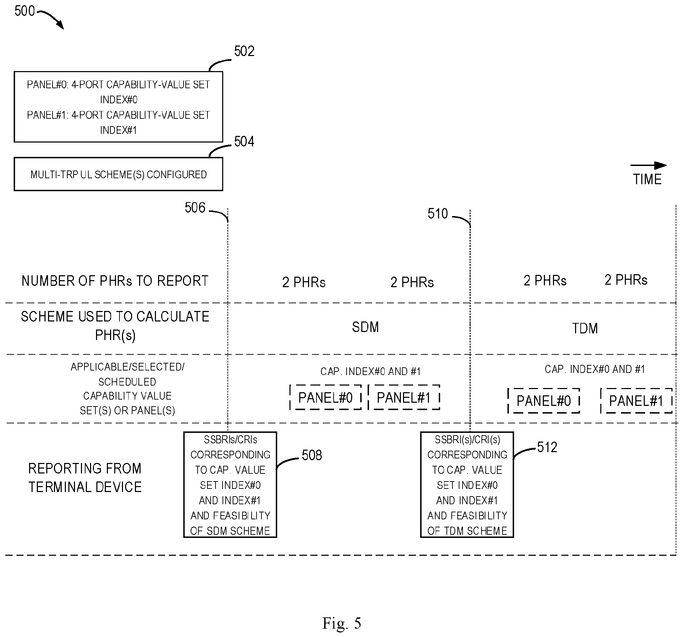

Reference is further made to FIG. 5, which illustrates another example process of PHR operation.

Block 502 and block 504 shows configurations of UE 110 from the network device. The configuration is similar to those in FIG. 4 and thus will not be elaborated herein.

At block 506, UE 110 may report beam reporting and feasibility information. The reported beam reporting may contain SSBRIs or CRIs corresponding to capability value set index #0 and index #1, and the feasibility may indicate the SDM scheme, as illustrated in block 508. Thus, UE 110 may decide up to two PHRs to be obtained and the SDM scheme may be used as the scheme for PHR calculation.

At 510, UE 110 may report beam reporting and feasibility information. The reported beam reporting may contain SSBRIs or CRIs corresponding to capability value set index #0 and index #1, and the feasibility of TDM scheme, as illustrated in block 512. Thus, UE 110 may decide up to two PHRs to be obtained and the TDM scheme may be used as the scheme for PHR calculation. It's note that if they UE reports doesn't report feasibility of SDM or simultaneous UL transmission scheme, this may imply that (multiple TRPs) TDM scheme is feasible (assuming that the UE reports is configured with multiple TRPs UL scheme(s) and the UE reports feasibility of multiple TRPs UL scheme(s)).

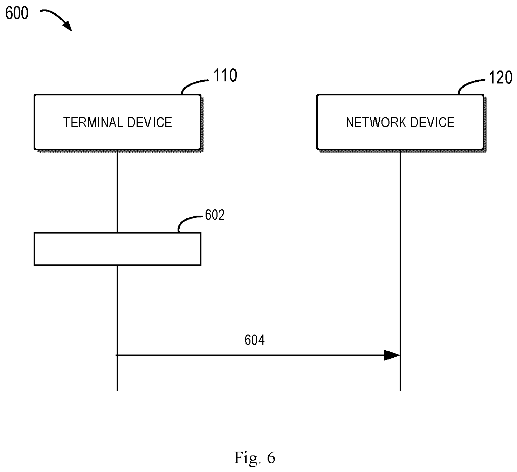

Reference is now made to FIG. 6, which shows a process 600 for operation of PHR according to an embodiment of the present disclosure. For the purpose of discussion, the process 600 will be described with reference to FIG. 1. The process 600 may involve the terminal device 110 and the TRP 120 as illustrated in FIG. 1. It would be appreciated that although the process 600 has been described in the network environment 100 of FIG. 1, this process may be likewise applied to other communication scenarios where different network devices are jointly deployed to provide respective serving cells. It would also be appreciated that although the operation of PHR between the terminal device 110 and the TRPs 120 and 130 is discussed, a similar process can be applied for any other terminal devices or network devices.

At 602, the terminal device 110 obtains one PHR or at least two PHRs to be reported based on feasibility information on the terminal device 110. The feasibility information indicates whether a multiple TRPs uplink scheme is feasible for the terminal device.

At 604, terminal device 110 perform a PHR reporting comprising the obtained one PHR or the obtained at least two PHRs to a network device 120.

In some example embodiments, terminal device 110 may transmit a report of the feasibility information to the network device 120 after 602 and before 604. In some example embodiments, terminal device 110 may transmit a report of the feasibility information to the network device 120 after 604.

In some example embodiments, after 604, network device 120 may transmit TCI states corresponding to one or more of: CORESET Pool index(es), TRP(s), panel(s) or PCI(s). In some example embodiments, network device 120 may also transmit an indication which indicates two capability values set indexes may be feasible of uplink transmission scheme for PHR reporting.

In some example embodiments, network device 120 may transmit an indication from the network device indicating two capability values set indexes are feasible before 602. In some example embodiments, network device 120 may transmit a PHR report mode indication indicating whether one PHR, or at least two PHRs are to be reported.

The process is just illustrated for illustration of the example process and detailed operations may refer to those described with reference to FIG. 1 to FIG. 5.

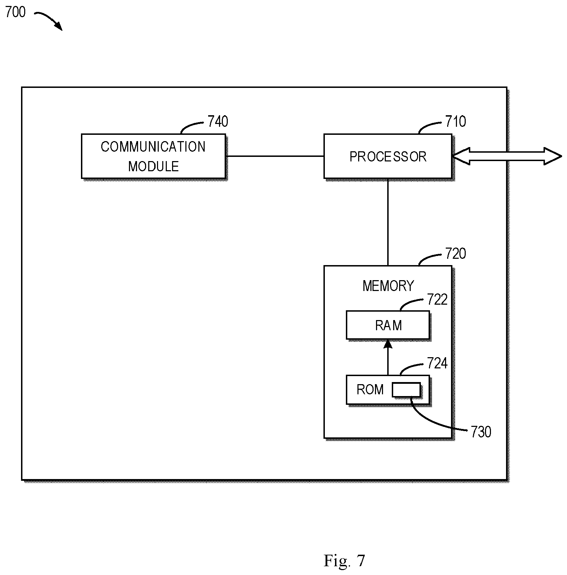

FIG. 7 is a simplified block diagram of a device 700 that is suitable for implementing embodiments of the present disclosure. The device 700 may be provided to implement the communication device, for example the terminal device 110 as shown in FIG. 1. As shown, the device 700 includes one or more processors 710, one or more memories 740 may couple to the processor 710, and one or more transmitters and/or receivers (TX/RX) 740 may couple to the processor 710.

The TX/RX 740 is for bidirectional communications. The TX/RX 740 has at least one antenna to facilitate communication. The communication interface may represent any interface that is necessary for communication with other network elements, for example the communication interface may be wireless or wireline to other network elements, or software based interface for communication.

The processor 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a read only memory (ROM) 724, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processor 710. The program 730 may be stored in the ROM 724. The processor 710 may perform any suitable actions and processing by loading the program 730 into the RAM 722.

The embodiments of the present disclosure may be implemented by means of the program so that the device 700 may perform any process of the disclosure as discussed with reference to FIG. 2 to FIG. 6. The embodiments of the present disclosure may also be implemented by hardware or by a combination of software and hardware.

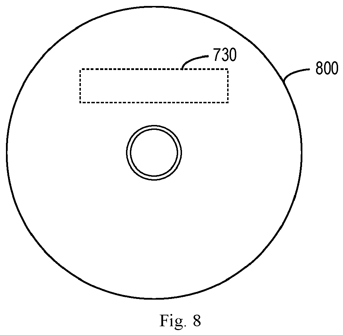

In some embodiments, the program 730 may be tangibly contained in a computer readable medium which may be included in the device 700 (such as in the memory 720) or other storage devices that are accessible by the device 700. The device 700 may load the program 730 from the computer readable medium to the RAM 722 for execution. The computer readable medium may include any types of tangible non-volatile storage, such as ROM, EPROM, a flash memory, a hard disk, CD, DVD, and the like. FIG. 8 shows an example of the computer readable medium 800 in form of CD or DVD. The computer readable medium has the program 730 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the methods 200 or 300 as described above with reference to FIG. 2 or FIG. 3. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal device, comprising:
means for obtaining one power headroom report, PHR, or at least two PHRs to be reported based on feasibility information on the terminal device, wherein the feasibility information indicates whether a multiple transmission reception points, TRPs, uplink scheme is feasible for the terminal device; and
means for performing a PHR reporting comprising the obtained one PHR or the obtained at least two PHRs to a network device.

2. The terminal device of Claim 1, wherein the terminal device dynamically switches between the multiple TRPs uplink scheme and a single TRP uplink scheme.

3. The terminal device of Claim 1 or 2, wherein the obtaining one PHR or at least two PHRs to be reported further comprises:
determining the one PHR or the at least two PHRs to be reported based on the feasible uplink scheme of the multiple TRPs or the single TRP.

4. The terminal device of any of claims 1 to 3, wherein the obtaining one PHR or at least two PHRs to be reported further comprises:
triggering transmitting one PHR instead of at least two PHRs based on one or more of:
a single capability value set index instead of at least two capability values set indexes is detected or determined or reported by the terminal device;
the terminal device is indicated a single capability value set index instead of at least two capability value set indexes to be feasible; or
one-PHR report mode is configured or indicated instead of at least two-PHR report mode.

5. The terminal device of any of claims 1 to 4, wherein the obtaining one PHR or at least two PHRs to be reported further comprises:
triggering transmitting at least two PHRs instead of one PHR, wherein the condition for the triggering comprises:
a single capability value set index instead of at least two capability values set indexes is detected or determined or reported by the terminal device;
the terminal device is indicated at least two capability value set indexes instead of one capability value set index to be feasible; or
at least two -PHRs report mode is configured or indicated instead of one-PHR report mode.

6. The terminal device of any of Claims 1 to 5, wherein the feasibility information comprises one or more of:
information indicating feasibility of a single capability value set index;
information indicating feasibility of at least two different capability value set indexes;
an indication from the network device indicating a single capability value set index to be feasible;
an indication from the network device indicating at least two capability values set indexes to be feasible; or
a PHR report mode indication from the network device indicating whether one PHR, or at least two PHRs to be reported.

7. The terminal device of any of Claims 1 to 6, wherein the feasibility information is determined based on one or more of:
at least one beam reporting;
indicated at least one transmission configuration indicator, TCI state for at least one uplink transmission in a cell;
activated at least one TCI state for at least one uplink transmission;
uplink transmission scheme applicable for PHR reporting; or
a PHR report mode indication from the network device indicating whether one PHR, or at least two PHRs are to be reported.

8. The terminal device of any of Claims 1 to 7, wherein the at least two PHRs are obtained based on one or more of the following conditions:
a beam reporting corresponds to at least two different capability value set indexes; or
reported beams in a group-based beam reporting contain beam pairs corresponding to at least two TRPs.

9. The terminal device of any of Claims 1 to 8, wherein the at least two PHRs are obtained based on one or more of the following conditions:
a feasibility indicates that applying any of a space division multiplexing, SDM, uplink transmission scheme or a time division multiplexing, TDM, uplink transmission scheme, or overlapping uplink transmissions is feasible, wherein the feasibility is determined based on the beam reporting corresponding to at least two different capability value set indexes;
a feasibility indicates that applying any of a SDM uplink transmission scheme, a TDM uplink transmission scheme, or overlapping uplink transmissions is feasible, wherein the feasibility is determined based on the group-based beam reporting containing beam pairs corresponding to at least two TRPs;
uplink transmission scheme applicable for PHR reporting is determined as SDM or TDM or overlapping uplink transmissions; or
a cell triggers the PHR and uses any of SDM uplink transmission, TDM uplink transmission scheme, or overlapping uplink transmission scheme, wherein the cell is different from a certain cell on which one or at least two PHRs are to be reported.

10. The terminal device of any of Claims 1 to 9, wherein the at least two PHRs are obtained based on one or more of the following conditions:
at least two TCI states corresponding to at least two capability value set indexes are indicated;
at least two TCI states corresponding to at least two capability value set indexes are activated;
at least two TCI states are indicated;
at least two TCI states are activated;
TCI states corresponding to reported beams are indicated, wherein the reported beams are contained in the beam reporting corresponding to at least two different capability value set indexes, or contained in the group-based beam reporting containing beam pairs corresponding to at least two TRPs;
TCI states corresponding to reported beams are activated, wherein the reported beams are contained in the beam reporting corresponding to at least two different capability value set indexes or contained in the group-based beam reporting containing beam pairs corresponding to at least two TRPs;
TCI states corresponding to at least two different control resource set, CORESET, pool indexes are indicated;
TCI states corresponding to at least two different TRPs are indicated;
TCI states corresponding to at least two panels are indicated;
TCI states corresponding to at least two different physical cell identities, PCIs, are indicated;
TCI states corresponding to at least two different CORESET Pool indexes are activated;
TCI states corresponding to at least two different TRPs are activated;
TCI states corresponding to at least two panels are activated; or
TCI states corresponding to at least two different PCIs are activated.

11. The terminal device of any of Claims 1 to 10, wherein the one PHR is obtained based on one or more of the following conditions:
a beam reporting corresponds to a single capability value set index; or
reported beams in a group-based beam reporting contain no pair of beams corresponding to at least two TRPs.

12. The terminal device of any of Claims 1 to 11, wherein the one PHR is obtained based on one or more of the following conditions:
reported beams in the beam reporting correspond to a single capability value set index;
reported beams in the group-based beam reporting contain no beam pairs corresponding to at least two TRPs; or
uplink transmission scheme applicable for the PHR reporting is determined as a single-TRP uplink transmission scheme.

13. The terminal device of any of Claims 1 to 12, wherein the one PHR is obtained based on one or more of the following conditions:
at least two TCI states corresponding to a single capability value set index are indicated;
at least two TCI states corresponding to a single capability value set index are activated;
a single TCI state is indicated;
a single TCI state is activated;
at least one TCI state not corresponding to reported beams is indicated, wherein the reported beams are contained in beam reporting, corresponding to at least two different capability value set indexes;
at least one TCI state not corresponding to reported beams is activated, wherein the reported beams are contained in beam reporting, corresponding to at least two different capability value set indexes;
at least one TCI state corresponding to a single CORESET pool index;
at least one TCI state corresponding to a single TRP is indicated;
at least one TCI state corresponding to a single panel is indicated;
at least one TCI state corresponding to a single physical cell identity, PCI, is indicated;
at least one TCI state corresponding to a single CORESET pool index is activated;
at least one TCI state corresponding to a single TRP is activated;
at least one TCI state corresponding to a single panel is activated; or
at least one TCI state corresponding to a single PCI is activated.

14. A network device, comprising:
means for receiving a report of feasibility information from a terminal device, or transmit feasibility information to a terminal device, wherein the feasibility information indicates whether a multiple Transmission Reception Points, TRPs, uplink scheme is feasible for the terminal device; and
means for receiving a power headroom report, PHR reporting from the terminal device, wherein the PHR reporting is obtained based on the feasibility information.

15. The network device of Claim 14, wherein the network device further comprises means for transmitting one or more of:
an indication indicating whether one or two capability values set indexes to be feasible;
indicated at least one transmission configuration Indicator, TCI, state for at least one uplink transmission in a certain cell;
activated at least one TCI state for at least one uplink transmission in a certain cell; or
uplink transmission scheme applicable for PHR reporting.

16. A method at a terminal device comprising:
obtaining, by the terminal device, one power headroom report, PHR, or at least two PHRs to be reported based on feasibility information on the terminal device, wherein the feasibility information indicates whether a multiple transmission reception points, TRPs, uplink scheme is feasible for the terminal device; and
performing, by the terminal device, a PHR reporting comprising the obtained one PHR or the obtained at least two PHRs to a network device.

17. A method at a network device comprising:
receiving, by the network device, a report of feasibility information from a terminal device, or transmitting feasibility information to a terminal device, wherein the feasibility information indicates whether a multiple transmission reception points, TRPs, uplink scheme is feasible for the terminal device; and
receiving, by the network device, a PHR reporting from the terminal device, wherein the PHR reporting is obtained based on the feasibility information.
